# EUROPEAN PATENT APPLICATION

(11) **EP 4 407 715 A1**
(43) Date of publication of application: **31.07.2024**
(21) Application number: 22962268.3
(22) Date of filing: 11.11.2022
(51) Int. Cl.: H01M 4/58, H01M 4/62

(54) **POSITIVE ELECTRODE MATERIAL COMPOSITION, POSITIVE ELECTRODE SHEET AND PREPARATION METHOD THEREFOR, BATTERY, AND ELECTRICAL DEVICE**

(71) Applicant: Contemporary Amperex Technology Co., Limited, Ningde City, Fujian PRC 352100 (CN)
(72) Inventor: NIU, Congsu, Ningde City, Fujian 352100 (CN); PEI, Zhenxing, Ningde City, Fujian 352100 (CN); LI, Xiaowei, Ningde City, Fujian 352100 (CN); LIU, Xiomei, Ningde City, Fujian 352100 (CN)
(74) Representative: Jacob, Reuben Ellis
(86) International application number: PCT/CN2022/131324
(87) International publication number: WO 2024/098370

(57) **Abstract**

The present application provides a positive electrode material composition, a positive electrode plate and a preparation method therefor, a battery, and an electrical device. The positive electrode material composition includes a positive electrode active material and optionally, an optional positive electrode conductive agent, the positive electrode active material includes a core and a shell on at least a portion of a surface of the core, the core includes lithium phosphate, the shell includes a carbon material, a graphitization degree of the positive electrode active material is denoted as g₁, a mass percentage of the positive electrode conductive agent in the positive electrode material composition is denoted as wi, 10% ≤ gi ≤ 50%, and 0% ≤ wi ≤ 1%. The battery can have both high energy density and good rate performance.

## Description

### TECHNICAL FIELD

The present application belongs to the technical field of batteries, and specifically relates to a positive electrode material composition, a positive electrode plate, a method for the preparation thereof, a battery, and an electrical device.

### BACKGROUND

In recent years, batteries have been widely used in energy storage power systems such as hydropower, firepower, wind power, and solar power plants, and in many fields such as electric tools, electric bicycles, electric motorcycles, electric vehicles, military equipment, and aerospace. With the application and promotion of batteries, their safety performance is receiving increasing attention. Lithium phosphate, represented by lithium iron phosphate, has become one of the most concerned positive electrode active materials due to its advantages of good safety performance, low price, and abundant raw material sources. However, batteries using lithium phosphate have low energy density and poor rate performance.

### SUMMARY

The present application aims to provide a positive electrode material composition, a positive electrode plate and a method for the preparation thereof, a battery, and an electrical device, wherein the battery can have both high energy density and good rate performance.

A first aspect of embodiments of the present application provides a positive electrode material composition, comprising a positive electrode active material and an optional positive electrode conductive agent, wherein the positive electrode active material includes a core and a shell located on at least a portion of a surface of the core, the core includes a lithium phosphate, the shell includes a carbon material, a graphitization degree of the positive electrode active material is denoted as g₁, a mass percentage of the positive electrode conductive agent in the positive electrode material composition is denoted as wi, 10% ≤ g₁ ≤ 50%, and 0% ≤ w₁ ≤ 1%.

The inventor found in research that, when the graphitization degree of the positive electrode active material is 10%-50% and the mass percentage of the positive electrode conductive agent in the positive electrode material composition is 0%-1%, the battery can have both high energy density and good rate performance. Although the mechanism is not yet clear, the inventor believes that the migration speeds of lithium ions and electrons can achieve a good match, which can reduce the polarization and internal resistance of the battery and enable the battery to have good rate performance; meanwhile, the reaction rate of the positive electrode is prone to a good match with the reaction rate of the negative electrode, which can furthest avoid problems such as an increase in the viscosity of the electrolytic solution on the negative electrode side, slow transport of lithium ions, and an increase in the polarization of the battery due to excessive accumulation of the lithium ions on the negative electrode side during charging; moreover, after the consumption of the positive electrode conductive agent is reduced, the consumption of the lithium phosphate can be higher, which can also enable the battery to have a high energy density.

In some embodiments of the present application, 15% ≤ g₁ ≤ 48% and 0% ≤ w₁ ≤ 0.8%.

In some embodiments of the present application, 15% ≤ g₁ ≤ 48% and 0% ≤ w₁ ≤ 0.6%.

In some embodiments of the present application, 15% ≤ g₁ ≤ 48% and 0% ≤ w₁ ≤ 0.4%.

In some embodiments of the present application, 20% ≤ g₁ ≤ 45% and 0% ≤ w₁ ≤ 0.6%.

In some embodiments of the present application, 20% ≤ gi ≤ 45% and 0% ≤ wi ≤ 0.4%.

In some embodiments of the present application, 20% ≤ gi ≤ 45% and 0% ≤ wi ≤ 0.2%.

In some embodiments of the present application, 25% ≤ g₁ ≤ 50% and 0% ≤ w₁ ≤ 0.2%.

In some embodiments of the present application, 25% ≤ g₁ ≤ 50% and wi is 0%.

In some embodiments of the present application, 25% ≤ g₁ ≤ 40% and wi is 0%.

In some embodiments of the present application, 25% ≤ g₁ ≤ 35% and wi is 0%.

By further adjusting the graphitization degree gi of the positive electrode active material and the mass percentage wi of the positive electrode conductive agent, the consumption of the positive electrode conductive agent can be further reduced without affecting the rate performance of the battery, thereby further increasing the energy density of the battery.

In some embodiments of the present application, the graphitization degree gi of the positive electrode active material is obtained by an X-ray diffraction method.

In some embodiments of the present application, a powder resistivity of the positive electrode active material is greater than 0 and less than or equal to 30 Ω·cm, and optionally 0.5 Q·cm-10 Ω·cm.

In some embodiments of the present application, a mass percentage of a carbon element in the positive electrode active material is 0.5%-5%, and optionally 1%-3.5%.

When the mass percentage of the carbon element is within the above range, the conductivity of the positive electrode active material can be improved, a decrease in the specific capacity of the positive electrode active material due to the too thick shell can be avoided, and an impact on the processing performance of the positive electrode plate due to excessive specific surface area of the positive electrode active material can also be avoided.

In some embodiments of the present application, an average particle size Dv50 of the positive electrode active material is 0.5 µm-10 µm, and optionally 1 µm to 4 µm.

When the average particle size Dv50 of the positive electrode active material is within the above range, the transport performance of lithium ions and electrons can be improved, thereby further improving the cycle performance and rate performance of the battery; and the positive electrode plate can have a high compaction density, thereby further increasing the energy density of the battery.

In some embodiments of the present application, a powder compaction density of the positive electrode active material is ≥ 2.5 g/cm³ under a force of 3 tons. This is beneficial to increasing the energy density of the battery.

In some embodiments of the present application, the lithium phosphate includes one or more selected from lithium iron phosphate, lithium manganese iron phosphate, and a composite material obtained by cladding and/or doping modification of the above materials.

In some embodiments of the present application, the lithium phosphate has a molecular formula of LiFe_{1-x-y}MnₓM_{y}PO₄, wherein 0 ≤ x ≤ 1, and 0 ≤ y<1; and M includes one or more selected from transition metal elements other than Fe and Mn, and non-transition metal elements, and optionally includes one or more selected from V, Nb, Ti, Co, Ni, Sc, Ge, Mg, Al, Zr, Mn, Hf, Ta, Mo, W, Ru, Ag, Sn, and Pb.

In some embodiments of the present application, the positive electrode conductive agent includes one or more selected from superconducting carbon, conductive graphite, acetylene black, carbon black, Ketjen black, carbon dots, carbon nanotubes, graphene, and carbon nanofibers.

In some embodiments of the present application, a mass percentage w₂ of the positive electrode active material in the positive electrode material composition is ≥ 97.0%, and optionally 97.0%-98.2%. Thus, a battery with high energy density can be obtained.

In some embodiments of the present application, the positive electrode material composition further includes a positive electrode binder and/or a positive electrode dispersant. The positive electrode binder is used for improving adhesion between particles of the positive electrode active material and between the positive electrode active material and a positive electrode current collector, so that the positive electrode plate forms a good electronic network. The positive electrode dispersant is used for improving the stability of a positive electrode slurry, reducing the risk of cracking of a positive electrode film layer, and improving the dispersion of the positive electrode conductive agent.

In some embodiments of the present application, a mass percentage w₃ of the positive electrode binder in the positive electrode material composition is 1%-3%.

In some embodiments of the present application, a mass percentage w₄ of the positive electrode dispersant in the positive electrode material composition is 0%-0.5%.

A second aspect of the present application provides a positive electrode plate, including a positive electrode current collector and a positive electrode film layer disposed on the positive electrode current collector, wherein the positive electrode film layer includes the positive electrode material composition in the first aspect of the present application.

In some embodiments of the present application, an areal density of the positive electrode plate is ≥ 300 mg/1540.25 mm², and optionally ≥ 410 mg/1540.25 mm², ≥ 450 mg/1540.25 mm², or ≥ 500 mg/1540.25 mm².

At present, the prior art believes that, as the coating weight of the positive electrode plate increases, in order to not deteriorate the internal resistance of the battery, the consumption of the positive electrode conductive agent needs to be increased. However, the inventor found in research that, when the positive electrode film layer includes the positive electrode material composition in the first aspect of the present application, the battery can have both high energy density and good rate performance; and as the coating weight of the positive electrode plate increases, the consumption of the positive electrode conductive agent does not need to be increased, but can be reduced, and even can be canceled, so as to increase the energy density of the battery without affecting the internal resistance and rate performance of the battery. The positive electrode material composition in the first aspect of the present application helps to improve the performance of a thick coated and/or high compaction density battery system, and enables the battery to have both high energy density and good rate performance.

In some embodiments of the present application, the areal density of the positive electrode plate is denoted as CW, in mg/1540.25 mm², the positive electrode plate satisfies 0 ≤ 100000 × (w₁/CW) ≤ 3.4, and optionally, 0 ≤ 100000 × (w₁/CW) ≤ 1.8.

In some embodiments of the present application, a thickness H of the positive electrode film layer is 70 µm-145 µm, and optionally 90 µm-138 µm.

In some embodiments of the present application, the thickness of the positive electrode film layer is denoted as H, in µm, the positive electrode satisfies 0 ≤ 100000 × (wi/H) ≤ 14, and optionally, 0 ≤ 100000 × (wi/H) ≤ 11.

In some embodiments of the present application, a compaction density PD of the positive electrode plate is ≥ 2.55 g/cm³, optionally ≥ 2.58 g/cm³, and more optionally ≥ 2.60 g/cm³. This is beneficial to increasing the energy density of the battery.

In some embodiments of the present application, the positive electrode plate further includes a conductive coating located between the positive electrode current collector and the positive electrode film layer to increase bonding force between the positive electrode film layer and the positive electrode current collector. Optionally, the conductive coating includes conductive carbon black and a binder. Optionally, a thickness of the conductive coating is greater than 0 and less than or equal to 2 µm.

In some embodiments of the present application, a resistance of the positive electrode plate is 0.1 S2-1 Q, and optionally 0.1 Q-0.6 Q. This is beneficial to improving the cycle performance and rate performance of the battery.

In some embodiments of the present application, a thickness of the positive electrode current collector is 10 µm-18 µm.

A third aspect of the present application provides a preparation method for a positive electrode plate, including the following steps: providing a positive electrode slurry, coating at least one surface of a positive electrode current collector with the positive electrode slurry, and obtaining a positive electrode plate through drying and compaction procedures, wherein the positive electrode slurry includes the positive electrode material composition in the first aspect of the present application and a solvent.

A fourth aspect of the present application provides a battery, including the positive electrode material composition in the first aspect of the present application, the positive electrode plate in the second aspect of the present application, or the positive electrode plate obtained by the preparation method in the third aspect of the present application.

A fifth aspect of the present application provides an electrical device, including the battery in the fourth aspect of the present application.

The battery of the present application can have both high energy density and good rate performance. The electrical device of the present application includes the battery provided by the present application, and therefore, has at least the same advantages as the battery.

### DESCRIPTION OF THE DRAWINGS

In order to describe the technical solutions of the embodiments of the present application more clearly, the accompanying drawings required in the embodiments of the present application will be briefly introduced below. Apparently, the drawings described below are merely some embodiments of the present application, and other drawings may also be obtained by those of ordinary skill in the art according to the drawings without any creative efforts.
Fig. 1 is a schematic diagram of an embodiment of a battery cell of the present application.
Fig. 2 is an exploded schematic diagram of an embodiment of a battery cell of the present application.
Fig. 3 is a schematic diagram of an embodiment of a battery module of the present application.
Fig. 4 is a schematic diagram of an embodiment of a battery pack of the present application.
Fig. 5 is an exploded schematic diagram of an embodiment of the battery pack shown in Fig. 4.
Fig. 6 is a schematic diagram of an embodiment of an electrical device including the battery of the present application as a power supply.

In the drawings, the accompanying drawings are not necessarily drawn to an actual scale. Among them, the reference sings in the drawings are illustrated as follows: 1 battery pack, 2 upper case body, 3 lower case body, 4 battery module, 5 battery cell, 51 housing, 52 electrode assembly, 53 cover plate.

### DETAILED DESCRIPTION

Hereinafter, embodiments of a positive electrode material composition, a positive electrode plate and a preparation method therefor, a battery, and an electrical device of the present application will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless otherwise specified, the wording such as "comprise/comprising", "include/including", and "contain/containing" adopted in the present application indicates the open-ended mode, but also can be interpreted as the closed-ended mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application, the terms "a plurality of" and "multiple" refer to two or more.

Unless otherwise specified, terms used in the present application have well-known meanings generally understood by those skilled in the art.

Unless otherwise specified, values of parameters mentioned in the present application can be measured by various commonly used test methods in the art, for example, measured by test methods provided by the present application.

A positive electrode active material, as an important component of a battery, has a crucial impact on battery performance. Lithium phosphate, represented by lithium iron phosphate, is currently one of the most concerned positive electrode active materials. However, compared to a ternary positive electrode active material, a battery using the lithium phosphate has a lower energy density. In order to increase the energy density of the battery using lithium phosphate, the commonly adopted strategy is to increase the coating weight and/or coating thickness of lithium phosphate. However, existing research suggests that the electronic conductivity and ionic conductivity of lithium phosphate are both low, resulting in poor rate performance of the battery; as the coating weight and/or coating thickness of the lithium phosphate increase, the rate performance of the battery will continue to deteriorate, and if the consumption of a conductive agent is further reduced on this basis, the deterioration of battery performance, especially rate performance will be accelerated; in order to ensure good rate performance of the battery, the consumption of the conductive agent needs to be increased; however, the increase in the consumption of the conductive agent will lead to a decrease in the consumption of the lithium phosphate, which in turn will lead to a decrease in the energy density of the battery.

Therefore, currently the battery using the lithium phosphate cannot effectively balance high energy density and good rate performance.

The inventor of the present application found in the research process that, by reasonably adjusting the graphitization degree of the lithium phosphate and the consumption of the conductive agent, the battery using the lithium phosphate can have both high energy density and good rate performance.

### Positive electrode material composition

Specifically, a first aspect of the embodiments of the present application provides a positive electrode material composition.

The positive electrode material composition includes a positive electrode active material and an optional positive electrode conductive agent, the positive electrode active material includes a core and a shell located on at least a portion of a surface of the core, the core includes a lithium phosphate, the shell includes a carbon material, a graphitization degree of the positive electrode active material is denoted as g₁, a mass percentage of the positive electrode conductive agent in the positive electrode material composition is denoted as wi, 10% ≤ gi ≤ 50%, and 0% ≤ wi ≤ 1%.

The inventor of the present application found during in-depth research on the energy density and rate performance of a battery that a key factor affecting the improvement on the rate performance of the battery is matching of migration speeds of lithium ions and electrons. When the battery is charged, lithium ions migrate from a lithium phosphate bulk phase (or lattices) to the surface, enter an electrolytic solution under the action of an external electric field, then migrate to the surface of a negative electrode active material (such as graphite) through the electrolytic solution, and enter the interior of the negative electrode active material (such as being intercalated between graphite layers). Meanwhile, electrons flow from a positive electrode to a negative electrode through an external circuit. When the battery is discharged, lithium ions are deintercalated from the negative electrode active material, enter the electrolytic solution under the action of an external electric field, then migrate to the surface of the positive electrode active material through the electrolytic solution, and enter the bulk phase (or lattices) of the positive electrode active material. Meanwhile, electrons flow from the negative electrode to the positive electrode through the external circuit. Therefore, the charging and discharging processes of the battery require joint participation of the lithium ions and the electrons.

The electronic conductivity of the lithium phosphate is relatively low. In order to improve the conductivity, the current strategy is mainly to clad the surface of the lithium phosphate with amorphous carbon. The cladding with the amorphous carbon can improve the conductivity of the lithium phosphate, increase wettability of the lithium phosphate by the electrolytic solution, reduce polarization of the battery, and increase the migration speed of the lithium ions. However, the poor conductivity of the amorphous carbon limits the improvement effect on the conductivity of the lithium phosphate. Therefore, a large amount of conductive agent is still used in practical applications. When the consumption of the conductive agent increases, the consumption of the lithium phosphate will decrease, which in turn will lead to a decrease in the energy density of the battery, so that the battery cannot balance high energy density and good rate performance.

The inventors found in research that the positive electrode active material having the graphitization degree of greater than or equal to 10% can help to improve the conductivity of the lithium phosphate and improve the rate performance of the battery. However, the inventors also found in further research that the graphitization degree of the positive electrode active material is not necessarily better the higher it is; after the graphitization degree of the positive electrode active material exceeds 50%, although the conductivity of the positive electrode active material is excellent, the rate performance of the battery using the material will not continue to improve, and as the charging current increases, the rate performance of the battery decreases to varying degrees; meanwhile, after the graphitization degree of the positive electrode active material exceeds 50%, the compaction density of the positive electrode plate also decreases, thereby decreasing the energy density of the battery; moreover, after the graphitization degree of the positive electrode active material exceeds 50%, the cycle performance of the battery may deteriorate.

A possible reason is that, after the graphitization degree of the positive electrode active material exceeds 50%, its conductivity is excellent, the reaction rate of the positive electrode may be significantly greater than that of the negative electrode accordingly, and excessive lithium ions may accumulate on the negative electrode side during charging to increase the viscosity of the electrolytic solution on the negative electrode side, which is not conducive to the transport of lithium ions and will increase polarization of the battery; and after the graphitization degree of the positive electrode active material exceeds 50%, the performance of the carbon material in the shell may have a qualitative change, and the amorphous carbon tends to transform into graphitized carbon (or crystalline carbon). The graphitized carbon (or crystalline carbon) with small interlayer spacing, when applied on the surface of the lithium phosphate, will hinder rapid intercalation and deintercalation of the lithium ions, exacerbate the polarization of the battery, and ultimately lead to poor rate performance, especially high-rate charging performance of the battery. Meanwhile, after the graphitization degree of the positive electrode active material exceeds 50%, nanopore structures in the carbon material decrease, which will reduce the wettability of the lithium phosphate by the electrolytic solution, reduce the migration speed of the lithium ions, and further exacerbate the polarization of the battery to affect the rate performance. Moreover, after the graphitization degree of the positive electrode active material exceeds 50%, the shell has large deformation during the intercalation and deintercalation of the lithium ions, resulting in poor structural stability of the shell and easy detachment from the surface of the lithium phosphate. Consequently, the conductivity of the lithium phosphate decreases, the irreversible consumption of the lithium ions increases, and the cycle performance of the battery is affected.

Furthermore, the inventors of the present application also noted in research that, when the graphitization degree of the positive electrode active material is 10%-50%, if a high content of positive electrode conductive agent is further used, the energy density of the battery will decrease, and also the improvement on the rate performance of the battery is disadvantageously affected. A possible reason is that, the reaction rate of the positive electrode may be significantly greater than that of the negative electrode, and excessive lithium ions will accumulate on the negative electrode side during charging to increase the viscosity of the electrolytic solution on the negative electrode side, which is not conducive to the transport of lithium ions and will also increase polarization of the battery. Moreover, another reason may be a mismatch between the migration speeds of lithium ions and electrons. When the battery operates, the migration speed of electrons in the external circuit is too fast, while the migration speed of lithium ions inside the battery is slow, resulting in excessive polarization of the battery. In addition, the higher the charging current for the battery, the more obvious the polarization of the battery, and the worse the rate performance, especially the high-rate charging performance of the battery.

The inventor found in further research that, when the graphitization degree of the positive electrode active material is 10%-50% and the mass percentage of the positive electrode conductive agent in the positive electrode material composition is 0%-1%, the battery can have both high energy density and good rate performance. Although the mechanism is not yet clear, the inventor believes that the migration speeds of lithium ions and electrons can achieve a good match, which can reduce the polarization and internal resistance of the battery and enable the battery to have good rate performance; meanwhile, the reaction rate of the positive electrode is prone to a good match with the reaction rate of the negative electrode, which can furthest avoid problems such as an increase in the viscosity of the electrolytic solution on the negative electrode side, slow transport of lithium ions, and an increase in the polarization of the battery due to excessive accumulation of the lithium ions on the negative electrode side during charging; moreover, after the consumption of the positive electrode conductive agent is reduced, the consumption of the lithium phosphate can be higher, which can also enable the battery to have a high energy density.

In the present application, the graphitization degree of the positive electrode active material refers to a graphitization degree of the carbon material in the shell of the positive electrode active material, has a well-known meaning in the art, and can be measured by instruments and methods known in the art. For example, d₀₀₂ may be obtained with an X-ray diffractometer in accordance with JIS K 0131-1996 and JB/T 4220-2011, and then the graphitization degree of the positive electrode active material is calculated according to the formula g = (0.344 - d₀₀₂)/(0.344 - 0.3354) × 100%. In the above formula, d₀₀₂ is the interlayer spacing of the C (002) crystal plane in the crystal structure of the positive electrode active material expressed in nanometers (nm). The test instrument may be a Bruker D8 Discover X-ray diffractometer.

In the present application, when the mass percentage wi of the positive electrode conductive agent in the positive electrode material composition is 0%, it indicates that the positive electrode material composition does not include the positive electrode conductive agent.

The inventor also found in further research that, by further adjusting the graphitization degree gi of the positive electrode active material and the mass percentage wi of the positive electrode conductive agent, the consumption of the positive electrode conductive agent can be further reduced without affecting the rate performance of the battery, thereby further increasing the energy density of the battery.

In some embodiments, 15% ≤ gi ≤ 48% and 0% ≤ w₁ ≤ 0.8%. Optionally, 15% ≤ gi ≤ 48% and 0% ≤ w₁ ≤ 0.6%. Optionally, 15% ≤ gi ≤ 48% and 0% ≤ wi ≤ 0.4%.

In some embodiments, 20% ≤ gi ≤ 45% and 0% ≤ wi ≤ 0.6%. Optionally, 20% ≤ gi ≤ 45% and 0% ≤ w₁ ≤ 0.4%. Optionally, 20% ≤ gi ≤ 45% and 0% ≤ wi ≤ 0.2%.

In some embodiments, 25% ≤ g₁ ≤ 50% and 0% ≤ wi ≤ 0.2%.

In some embodiments, 25% ≤ g₁ ≤ 50% and wi is 0%. The inventor also found in further research that, by further adjusting the graphitization degree gi of the positive electrode active material and the mass percentage wi of the positive electrode conductive agent, the positive electrode conductive agent can be canceled on the premise of good rate performance of the battery, thereby further increasing the energy density of the battery.

In some embodiments, 25% ≤ gi ≤ 40% and wi is 0%. Optionally, 25% ≤ gi ≤ 35% and wi is 0%. By further adjusting the range of the graphitization degree gi of the positive electrode active material, the battery can have good cycle performance on the basis of high energy density and good rate performance. A possible reason is that, the large interlayer spacing of the shell ensures better structural stability, and is also beneficial to improving the wettability of the electrolytic solution for the positive electrode plate and increasing the migration speed of lithium ions, thereby ensuring good cycle performance of the battery.

In some embodiments, a powder resistivity of the positive electrode active material is greater than 0 and less than or equal to 30 Ω·cm, and optionally 0.1 Ω·cm-20 Ω·cm, 0.2 Q-cm-15 Ω·cm, 0.5 Q·cm-10 Ω·cm, 0.5 Q-cm-8 Ω·cm, or 0.5 Q-cm-5 Ω·cm.

In the present application, the powder resistivity of the positive electrode active material has a well-known meaning in the art and can be tested by methods known in the art. An exemplary test method is as follows: weighing 1-5 g of a sample to be tested, adjusting the depth of a loading chamber of a powder resistivity meter, adding the sample to the loading chamber, applying pressure, recording the powder resistivity of the positive electrode active material under different pressure, stopping testing until the pressure continues to increase and the powder resistivity value does not change, and recording a powder resistivity value at this time as the powder resistivity of the positive electrode active material. The test instrument may be a PRCD 2100 powder resistivity meter from Yuanneng Technology Company.

In some embodiments, a mass percentage of a carbon element in the positive electrode active material is 0.5%-5%. For example, the mass percentage of the carbon element in the positive electrode active material may be 0.5%, 0.8%, 1%, 1.5%, 2%, 2.5%, 3%, 3.5%, 4%, 4.5%, 5%, or in any range consisting of any two of the above values. Optionally, the mass percentage of the carbon element in the positive electrode active material may be 1%-4%, 1%-3.5%, 1%-3.2%, or 1%-3%.

When the mass percentage of the carbon element is within the above range, the conductivity of the positive electrode active material can be improved, a decrease in the specific capacity of the positive electrode active material due to the too thick shell can be avoided, and an impact on the processing performance of the positive electrode plate due to excessive specific surface area of the positive electrode active material can also be avoided.

In some embodiments, an average particle size Dv50 of the positive electrode active material is 0.5 µm-10 µm. For example, the average particle size Dv50 of the positive electrode active material may be 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, or in any range consisting of any two of the above values. Optionally, the average particle size Dv50 of the positive electrode active material is 0.5 µm-8 µm, 0.5 µm-6 µm, 0.5 µm-4 µm, 0.8 µm-4 µm, or 1 µm-4 µm.

When the average particle size Dv50 of the positive electrode active material is within the above range, the transport performance of lithium ions and electrons can be improved, thereby further improving the cycle performance and rate performance of the battery; and the positive electrode plate can have a high compaction density, thereby further increasing the energy density of the battery.

In the present application, the average particle size Dv50 of the positive electrode active material has a well-known meaning in the art, represents a particle size corresponding to a cumulative volume distribution percentage 50% of the material, and can be measured by instruments and methods known in the art. For example, the average particle size may be measured by a laser particle size analyzer in accordance with GB/T 19077-2016. The test instrument may be a Mastersizer 2000E laser particle size analyzer.

In some embodiments, a powder compaction density of the positive electrode active material is ≥ 2.5 g/cm³ under a force of 3 tons. This is beneficial to increasing the energy density of the battery.

In the present application, the powder compaction density of the positive electrode active material has a well-known meaning in the art and can be measured by instruments and methods known in the art. For example, the powder compaction density may be measured by an electronic pressure testing machine in accordance with GB/T 24533-2009. The test instrument may be a UTM7305 electronic pressure testing machine. An exemplary testing method is as follows: weighing 1 g of a sample to be tested, adding the sample to a mold with a bottom area of 1.327 cm², applying pressure to 3 tons, holding the pressure for 30 seconds, then releasing the pressure, standing for 10 seconds, and then recording and calculating a powder compaction density of the positive electrode active material under a force of 3 tons.

In some embodiments, a specific capacity of the positive electrode active material is ≥ 157 mAh/g. This is beneficial to increasing the energy density of the battery.

In some embodiments, the lithium phosphate may include one or more of lithium iron phosphate, lithium manganese iron phosphate, and a composite material obtained by cladding and/or doping modification of the above materials.

In some embodiments, the lithium phosphate may have a molecular formula of LiFe_{1-x-y}MnₓM_{y}PO₄, where 0 ≤ x ≤ 1, and 0 ≤ y<1; optionally, 0 ≤ y ≤ 0. 1; and M includes one or more selected from transition metal elements other than Fe and Mn, and non-transition metal elements, and optionally includes one or more selected from V, Nb, Ti, Co, Ni, Sc, Ge, Mg, Al, Zr, Mn, Hf, Ta, Mo, W, Ru, Ag, Sn, and Pb. As an example, the lithium phosphate includes one or more selected from LiFePO₄, LiMnPO₄, and LiFe₁₋ₓ₁Mnₓ₁PO₄ (0 < x1< 1, and optionally, 0.5 ≤ x1 ≤ 0.8).

In some embodiments, a mass percentage w₂ of the positive electrode active material in the positive electrode material composition is ≥ 97.0%, and optionally 97.0%-98.2%. Thus, a battery with high energy density can be obtained.

The present application does not impose special restrictions on a type of the positive electrode conductive agent, and may employ a material known in the art. In some embodiments, the positive electrode conductive agent may include one or more selected from superconducting carbon, conductive graphite, acetylene black, carbon black, Ketjen black, carbon dots, carbon nanotubes, graphene, and carbon nanofibers.

In some embodiments, the positive electrode material composition may further include a positive electrode binder. The positive electrode binder is used for improving adhesion between particles of the positive electrode active material and between the positive electrode active material and a positive electrode current collector, so that the positive electrode plate forms a good electronic network. The present application does not impose special restrictions on a type of the positive electrode binder. As an example, the positive electrode binders may include one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

Due to the low content of the positive electrode conductive agent in the positive electrode material composition of the present application, the content of the positive electrode binder can be reduced, thereby further increasing the energy density of the battery. In some embodiments, a mass percentage w3 of the positive electrode binder in the positive electrode material composition may be 0.5%-3%, 1%-3%, 1%-2.5%, or 1%-2%.

In some embodiments, the positive electrode material composition may further include a positive electrode dispersant. The positive electrode dispersant is used for improving the stability of a positive electrode slurry, reducing the risk of cracking of a positive electrode film layer, and improving the dispersion of the positive electrode conductive agent. The present application does not impose special restrictions on a type of the positive electrode dispersant, for example, a positive electrode dispersant may be selectively used according to actual needs. As an example, the positive electrode dispersant may include one or more selected from cellulose-based compounds, polyethoxyalkanes, polyvinyl alcohol, polyvinyl pyrrolidone, polyvinyl acetal, polyethylene ether, polyethylene sulfonic acid, polyvinyl chloride, chitosan, starch, polyacrylamide, poly(N-isopropylacrylamide), poly(N,N-dimethylacrylamide), polyethylene imine, polyoxyethylene, poly(2-methoxyethoxyethylene), poly(acrylamide-co-diallyldimethylammonium chloride), acrylonitrile/butadiene/styrene polymer, acrylonitrile/styrene/acrylate polymer, nitrile rubber, and fluororubber. In some embodiments, a mass percentage w₄ of the positive electrode dispersant in the positive electrode material composition may be 0%-0.5%, and optionally greater than 0 and less than or equal to 0.5%. When w₄ is 0%, it indicates that the positive electrode material composition does not include the positive electrode dispersant.

In some embodiments, the positive electrode material composition may further include both a positive electrode binder and a positive electrode dispersant.

### [Preparation method for positive electrode active material]

In some embodiments, a positive electrode active material or a precursor thereof, an organic carbon source, and other optional components are mixed and placed in a protective atmosphere, and a positive electrode active material with a required graphitization degree can be obtained by controlling the sintering temperature and/or sintering time, or by adding additives such as a graphite catalyst during the sintering process.

In some embodiments, the sintering temperature may be 500°C-1200°C, such as 500°C, 600°C, 700°C, 800°C, 900°C, 1000°C, 1100°C, 1200°C, or in any range consisting of any two of the above values.

In some embodiments, the sintering time may be 1 h-20 h, such as 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, or in any range consisting of any two of the above values.

In some embodiments, the protective gas may include nitrogen, argon, helium, or a combination thereof.

The present application does not impose special restrictions on a type of the organic carbon source. In some embodiments, the organic carbon source includes carbonizable organic compounds and derivatives thereof, such as one or more of starch, sucrose, glucose, fructose, maltose, chitosan, citric acid, alkanes, olefins, alcohols, esters, and polymers (such as polyvinyl alcohol, polyethylene, polypropylene, and polypyrrole).

In some embodiments, the graphite catalyst may include a metal or a metal salt, such as nickel or nickel nitrate.

In some embodiments, the graphite catalyst may include a carbonizable organic compound with a cyclic structure and derivatives thereof. Optionally, the graphite catalyst may include one or more of naphthalene, phenanthrene, anthracene, pyrene, perylene, ferrocene, diphenylphosphine, and triphenylmethane.

In some embodiments, an addition amount of the graphite catalyst is less than 5% of the mass of the positive electrode active material, and is optionally 3% or less, 2% or less, or 1% or less.

In some embodiments, other components, such as additives, may be added as needed in the preparation process of the positive electrode active material, so that the shell further includes other components besides the carbon material. In some embodiments, the additives may be components used for improving some performance of the battery, such as an additive for improving the transport performance of lithium ions, and an additive for improving the interface performance of the positive electrode active material, as long as these additive components do not damage the main purpose of the present application.

### Positive electrode plate

A second aspect of the embodiments of the present application provides a positive electrode plate, including the positive electrode material composition in the first aspect of the embodiments of the present application.

In some embodiments, the positive electrode plate includes a positive electrode current collector and a positive electrode film layer disposed on the positive electrode current collector, wherein the positive electrode film layer includes the positive electrode material composition in the first aspect of the embodiments of the present application. For example, the positive electrode current collector has two surfaces opposite in its thickness direction, and the positive electrode film layer is disposed on either or both of the two opposite surfaces of the positive electrode current collector.

In some embodiments, the positive electrode film layer may further include other positive electrode active materials commonly known in the art for batteries. As an example, the other positive electrode active materials may include one or more selected from lithium transition metal oxides and modified compounds thereof. Examples of the lithium transition metal oxides may include one or more of lithium cobalt oxides, lithium nickel oxides, lithium manganese oxides, lithium nickel cobalt oxides, lithium manganese cobalt oxides, lithium nickel manganese oxides, lithium nickel cobalt manganese oxides, lithium nickel cobalt aluminum oxides, and respective modified compounds thereof.

In some embodiments, an areal density of the positive electrode plate is ≥ 300 mg/1540.25 mm², and optionally ≥ 410 mg/1540.25 mm², ≥ 450 mg/1540.25 mm², or ≥ 500 mg/1540.25 mm². This is beneficial to increasing the energy density of the battery.

At present, the prior art believes that, as the coating weight of the positive electrode plate increases, in order to not deteriorate the internal resistance of the battery, the consumption of the positive electrode conductive agent needs to be increased. However, the inventor found in research that, when the positive electrode film layer includes the positive electrode material composition in the first aspect of the embodiments of the present application, the battery can have both high energy density and good rate performance; and as the coating weight of the positive electrode plate increases, the consumption of the positive electrode conductive agent does not need to be increased, but can be reduced, and even can be canceled, so as to increase the energy density of the battery without affecting the internal resistance and rate performance of the battery.

The positive electrode material composition in the first aspect of the embodiments of the present application helps to improve the performance of a thick coated and/or high compaction density battery system, and enables the battery to have both high energy density and good rate performance.

In some embodiments, the areal density of the positive electrode plate is denoted as CW, in mg/1540.25 mm², the positive electrode plate satisfies 0 ≤ 100000 × (w₁/CW) ≤ 3.4, and optionally, 0 ≤ 100000 × (w₁/CW) ≤ 2.4, 0 ≤ 100000 × (w₁/CW) ≤ 1.8, 0 ≤ 100000 × (w₁/CW) ≤ 1.5, or 0 ≤ 100000 × (w₁/CW) ≤ 1.

In some embodiments, a thickness H of the positive electrode film layer is 70 µm-145 µm, and optionally 90 µm-138 µm.

In some embodiments, the thickness of the positive electrode film layer is denoted as H, in µm, the positive electrode plate satisfies 0 ≤ 100000 × (wi/H) ≤ 14, and optionally, 0 ≤ 100000 × (wi/H) < 11, 0 ≤ 100000 × (wi/H) ≤ 8, or 0 ≤ 100000 × (wi/H) ≤ 6.

In some embodiments, a compaction density PD of the positive electrode plate is ≥ 2.55 g/cm³, and optionally ≥ 2.58 g/cm³, ≥ 2.60 g/cm³, ≥ 2.62 g/cm³, or ≥ 2.65 g/cm³. This is beneficial to increasing the energy density of the battery.

In the present application, the areal density of the positive electrode plate has a well-known meaning in the art and can be tested by methods known in the art. For example, a single-side coated and cold-pressed positive electrode plate (for a double-sided coated positive electrode plate, the positive electrode film layer on one side may be wiped off first) may be cut into a small circular plate with an area of S1, and the weight of the small circular plate is measured, denoted as M₁. Then the positive electrode film layer of the weighed positive electrode plate is wiped off, and the weight of the positive electrode current collector is measured, denoted as M₀. The areal density of the positive electrode plate is = (M₁ - M₀)/ S₁.

In the present application, the compaction density of the positive electrode plate has a well-known meaning in the art and can be tested by methods known in the art. The compaction density of the positive electrode plate = the areal density of the positive electrode plate/ the thickness of the positive electrode film layer.

In the present application, the thickness of the positive electrode film layer has a commonly-known meaning in the art and can be tested by methods known in the art, for example, tested by a micrometer screw gauge.

In some embodiments, the positive electrode plate may further include a conductive coating located between the positive electrode current collector and the positive electrode film layer to increase bonding force between the positive electrode film layer and the positive electrode current collector. In some embodiments, the conductive coating may not be disposed.

In some embodiments, the conductive coating includes conductive carbon black and a binder. The present application does not impose special restrictions on a type of the binder, and an oil-based binder known in the art may be used. As an example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, and tetrafluoroethylene-hexafluoropropylene copolymer.

In some embodiments, a thickness of the conductive coating is greater than 0 and less than or equal to 2 µm.

In some embodiments, a resistance of the positive electrode plate is 0.1 S2-1 Q, and optionally 0.1 Q-0.8 S2, 0.1 Q-0.7 S2, or 0.1 Q-0.6 Q. This is beneficial to improving the cycle performance and rate performance of the battery.

In the present application, the resistance of the positive electrode plate has a well-known meaning in the art and can be tested by instruments and methods known in the art, for example, tested by a two-probe resistance tester. As an example, the resistance may be tested by the following method: obtaining a 4 cm × 25 cm sample in a longitudinal direction of the positive electrode plate; turning on the two-probe resistance tester, and selecting a single-point mode, wherein the test area of an input terminal is 1540.25 mm², 20 parallel samples are selected, pressure is 0.4 t, and a time interval is 15 s; placing the test sample between two probes, clicking a run button on software, then moving a reversing valve downward, automatically collecting a data after 15 s; repeating the test as above on another point and replacing the test sample until 20 points are tested to continue testing; and obtaining an average value of the above test results as the resistance of the positive electrode plate.

In some embodiments, a thickness of the positive electrode current collector may be 10 µm-18 µm, but the present application is not limited thereto.

In some embodiments, the positive electrode current collector may be a metal foil or a composite current collector. An aluminum foil may be used as an example of the metal foil. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver, and silver alloy. As an example, the polymer material base layer may include one or more of polypropylene (PP), polyethylene terephthalate (PET), polybutylene terephthalate (PBT), polystyrene (PS), and polyethylene (PE).

It should be noted that the parameters (such as areal density, compaction density, and thickness) of the positive electrode plate provided in the present application refer to the parameters of the positive electrode film layer on a single side of the positive electrode current collector. When the positive electrode film layer is disposed on two sides of the positive electrode current collector, if the parameters of the positive electrode film layer on either side satisfy the present application, it is considered to fall within the protection scope of the present application.

For the foregoing parameters of the positive electrode plate, such as areal density, compaction density, thickness, and resistance, a freshly prepared cold-pressed positive electrode plate may be directly tested, or a positive electrode plate obtained from a battery may be tested. An exemplary method for obtaining the positive electrode plate from the battery is as follows: fully discharging the battery, then disassembling the battery to take out the positive electrode plate, soaking the positive electrode plate in an organic solvent (such as dimethyl carbonate) for a period of time (such as 72 h or more), then taking the positive electrode plate out, and drying at a temperature for some time (such as in a vacuum oven at 80°C for more than 6 h).

### Preparation method for positive electrode plate

A third aspect of the embodiments of the present application provides a preparation method for a positive electrode plate, which can prepare the positive electrode plate in the second aspect of the embodiments of the present application.

The preparation method includes the following steps: providing a positive electrode slurry, coating at least one surface of a positive electrode current collector with the positive electrode slurry, and obtaining a positive electrode plate through drying and compaction procedures, wherein the positive electrode slurry includes the positive electrode material composition in the first aspect of the embodiments of the present application and a solvent.

In some embodiments, the solvent may include, but is not limited to, N-methylpyrrolidone (NMP).

### Battery

A fourth aspect of the embodiments of the present application provides a battery.

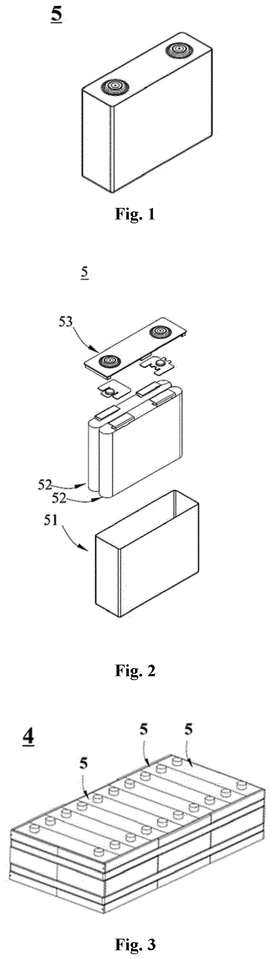

The battery mentioned in the examples or embodiments of the present application refers to a single physical module including one or more battery cells to provide higher voltage and capacity. For example, the battery mentioned in the present application may include a battery cell, a battery module, or a battery pack. The battery cell is a minimum unit that constitutes the battery, and can be independently charged and discharged. The present application does not limit the shape of the battery cell. The battery cell may be cylindrical, square, or in any other shape. Fig. 1 is a square battery cell 5 as an example.

In some embodiments, the battery cell includes an electrode assembly, and the cell battery may further include an outer package and an electrolyte. The electrode assembly usually includes a positive electrode plate and a negative electrode plate, and the outer package may be used for encapsulating the electrode assembly and the electrolyte. The outer package may be a hard case, such as a hard plastic case, an aluminum case, or a steel case. The outer package may alternatively be a soft package, such as a bag-type soft package. A material of the soft package may be plastic, such as one or more of polypropylene (PP), polybutylene terephthalate (PBT), and polybutylene succinate (PBS). The electrode assembly may be made by winding and/or lamination.

In some embodiments, as shown in Fig. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is closed to the opening to seal the accommodating cavity. The electrode assembly 52 is packaged in the accommodating cavity. The battery cell 5 may include one or more electrode assemblies 52, which may be adjusted according to a demand.

In some embodiments of the present application, the battery cells may be assembled into a battery module, the battery module may include a plurality of battery cells, and a specific quantity may be adjusted according to the application and capacity of the battery module. Fig. 3 is a schematic diagram of a battery module 4 as an example. As shown in Fig. 3, in the battery module 4, the plurality of battery cells 5 may be arranged sequentially in a length direction of the battery module 4. Alternatively, the battery cells may be arranged in any other manner. Further, the plurality of battery cells 5 may be fixed by fasteners.

Optionally, the battery module 4 may further include a housing with an accommodating space, and the plurality of battery cells 5 are accommodated in the accommodating space.

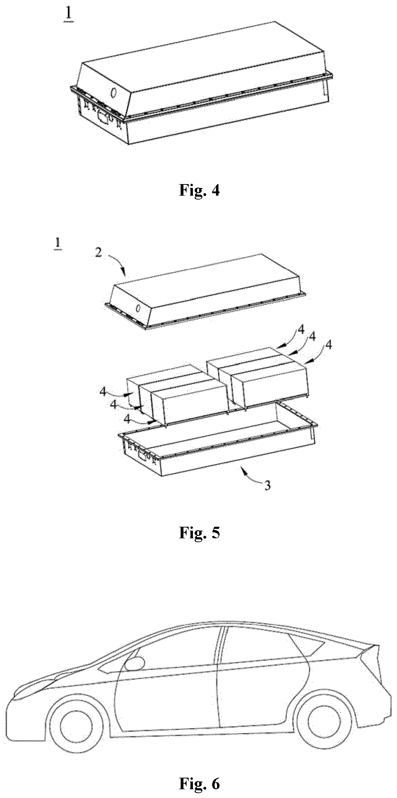

In some embodiments, the foregoing battery modules may be further assembled into a battery pack, and a quantity of the battery modules included in the battery pack may be adjusted according to the application and capacity of the battery pack. Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper case body 2 and a lower case body 3. The upper case body 2 fits on the lower case body 3 to form a closed space for accommodating the battery modules 4. The plurality of battery modules 4 may be arranged in the battery box in any manner.

### [Positive electrode plate]

The positive electrode plate used in the battery of the present application is the positive electrode plate described in any embodiment of the second aspect of the present application. Therefore, the battery of the present application can have both high energy density and good rate performance.

### [Negative electrode plate]

In some embodiments, the negative electrode plate includes a negative electrode current collector and a negative electrode film disposed on at least one surface of the negative electrode current collector and including a negative electrode active material. For example, the negative electrode current collector has two surfaces opposite in its thickness direction, and the negative electrode film is disposed on either or both of the two opposite surfaces of the negative electrode current collector.

The negative electrode active material may be a negative electrode active material commonly known in the art for batteries. As an example, the negative electrode active material includes, but is not limited to, one or more of natural graphite, artificial graphite, soft carbon, hard carbon, silicon-based materials, tin-based materials, and lithium titanate. The silicon-based materials may include one or more of elemental silicon, silicon oxides, silicon-carbon composites, silicon-nitrogen composites, and silicon alloy materials. The tin-based materials may include one or more of elemental tin, tin oxides, and tin alloy materials. The present application is not limited to these materials, and may also use other traditional and well-known materials that can be used as negative electrode active materials for batteries.

In some embodiments, the negative electrode film may further optionally include a negative electrode conductive agent. The present application does not impose special restrictions on a type of the negative electrode conductive agent. As an example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film may further optionally include a negative electrode binder. The present application does not impose special restrictions on a type of the negative electrode binder. As an example, the negative electrode binder may include one or more of styrene butadiene rubber (SBR), water-soluble unsaturated resin SR-1B, water-based acrylic resin (such as polyacrylic acid PAA, polymethyl methacrylate PMAA, polyacrylic acid sodium PAAS), polyacrylamide (PAM), polyvinyl alcohol (PVA), sodium alginate (SA), and carboxymethyl chitosan (CMCS).

In some embodiments, the negative electrode film may further optionally include other auxiliaries. As an example, the other auxiliaries may include a thickener, such as carboxymethyl cellulose sodium (CMC) or a PTC thermistor material.

In some embodiments, the negative electrode current collector may be a metal foil or a composite current collector. A copper foil may be used as an example of the metal foil. The composite current collector may include a polymer material base layer and a metal material layer formed on at least one surface of the polymer material base layer. As an example, the metal material may include one or more of copper, copper alloy, nickel, nickel alloy, titanium, titanium alloy, silver, and silver alloy. As an example, the polymer material base layer may include one or more of polypropylene (PP), polyethylene terephthalate (PET), polybutylene terephthalate (PBT), polystyrene (PS), and polyethylene (PE).

The negative electrode film is usually formed by coating the negative electrode current collector with a negative electrode slurry, drying, and cold pressing. The negative electrode slurry is usually formed by dispersing the negative electrode active material, the optional conductive agent, the optional binder, and other optional auxiliaries in a solvent and stirring uniformly. The solvent may be N-methylpyrrolidone (NMP) or deionized water, but is not limited to this.

The negative electrode plate does not exclude other additional functional layers besides the negative electrode film. For example, in some embodiments, the negative electrode plate described in the present application may further include a conductive coating (for example, usually composed of a conductive agent and a binder) sandwiched between the negative electrode current collector and the negative electrode film and disposed on the surface of the negative electrode current collector. In some embodiments, the negative electrode plate described in the present application may further include a protective layer covering the surface of the negative electrode film.

### [Electrolyte]

The electrolyte conducts lithium ions between the positive electrode plate and the negative electrode plate. A type of the electrolyte is not specifically limited in the present application, and may be selected according to requirements. For example, the electrolyte may include one or more selected from a solid electrolyte and a liquid electrolyte (namely, an electrolytic solution).

In some embodiments, the electrolyte is an electrolytic solution, which includes an electrolyte salt and a solvent.

The electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bis(oxalate)borate (LiBOB), lithium difluorophosphate (LiPO₂F₂), lithium difluorobisoxalate phosphate (LiDFOP), and lithium tetrafluorooxalate phosphate (LiTFOP).

A type of the solvent is not specifically limited and may be selected according to actual needs. In some embodiments, as an example, the solvent may include one or more selected from ethylene carbonate (EC), propylidene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfoyl meftyl (MSM), ethyl methyl sulfone (EMS), and ethyl sulfonyl ethane (ESE).

In some embodiments, the electrolytic solution may further optionally include additives. For example, the additives may include a negative electrode film-forming additive, a positive electrode film layer-forming additive, and additives that can improve some performances of batteries, such as an additive that improves overcharge performance of batteries, an additive that improves high-temperature performance of batteries, and an additive that improves low-temperature performance of batteries.

### [Separator]

In batteries that use electrolytic solutions and some batteries that use solid-state electrolytes, a separator is further included. The separator is disposed between the positive electrode plate and the negative electrode plate, mainly prevents a short circuit between a positive electrode and a negative electrode, and can enable lithium ions to pass. The present application does not impose special restrictions on a type of the separator. The separator may be any known porous separator with good chemical and mechanical stability. The separator may be a single-layer film or a multi-layer composite film. When the separator is a multi-layer composite film, materials of respective layers may be the same or different.

In some embodiments, the separator may include a base film and an optional protective coating. The base film may include a non-woven fabric, film or composite film with a porous structure, and a material for the base film includes one or more of polyethylene, polypropylene, polyvinylidene fluoride, polyethylene terephthalate, and polyimide.

The protective coating may be or not be disposed on the surface of the base film. In some embodiments, the protective coating is disposed on at least one surface of the base film, and the protective coating may be a polymer layer, an inorganic layer, or a layer formed by mixing polymers and inorganic materials.

The inorganic material layer includes inorganic particles and a binder. The inorganic particles include, but are not limited to, one or more of aluminum oxide, silicon oxide, magnesium oxide, titanium oxide, hafnium oxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate.

The polymer layer includes a polymer, and a material of the polymer includes, but is not limited to, one or more of polyamide, polyacrylonitrile, acrylate polymers, polyacrylic acid, polyacrylate, polyvinyl pyrrolidone, polyethylene ether, and polyvinylidene fluoride.

### [Preparation method]

The preparation method for a battery in the present application is well-known. In some embodiments, a positive electrode plate, a separator, a negative electrode plate, and an electrolytic solution may be assembled to form a battery. As an example, the positive electrode plate, the separator, and the negative electrode plate may be wound and/or laminated to form an electrode assembly, the electrode assembly is placed in an outer package and dried, then the electrolytic solution is injected, and a battery cell is obtained after formation and capacity procedures. A plurality of battery cells may be further connected in series, in parallel, or in hybrid to form a battery module. A plurality of battery modules may be further connected in series, in parallel, or in series and parallel to form a battery pack. In some embodiments, a plurality of battery cells may directly form a battery pack.

### Electrical device

The embodiments of the present application further provide an electrical device, including the battery of the present application. The battery may be used as a power supply of the electrical device, or may be used as an energy storage unit of the electrical device. The electrical device may be, but is not limited to, a mobile device (such as a mobile phone, a tablet computer, or a notebook computer), an electric vehicle (such as a full electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may have a specific type of battery based on its usage needs, such as battery cells, a battery module, or a battery pack.

Fig. 6 is a schematic diagram of an electrical device as an example. The electrical device is a full electric vehicle, a hybrid electric vehicle, a plug-in hybrid electric vehicle, or the like. In order to meet the requirements of the electrical device for high power and high energy density, the battery pack or battery module may be used as a power supply.

As another example, the electrical device may be a mobile phone, a tablet computer, a notebook computer, or the like. The electrical device is generally required to be thin and light, so the battery cells may be used as a power supply.

### Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

### Preparation of a positive electrode active material

Washed and dried lithium iron phosphate powder and glucose as an organic carbon source were dispersed through a grinding body for 1 h with the assistance of alcohol as a dispersant until evenly mixed. By adjusting a ratio of the lithium iron phosphate powder to the glucose to 80 wt%: 20 wt% to 95 wt%: 5 wt%, the content of a carbon element in a final material can be controlled to 0.7%-3.5%. The ground powder was divided into two portions. One portion was directly ground to a dry powder state, and the other portion was added with an amount of stone powder glue before grinding to a dry powder state. The two samples were mixed, ground and dispersed for 2 h, and afterwards the evenly mixed powder was placed in a tube furnace protected by a nitrogen atmosphere with the flow rate of nitrogen controlled to 0.02 L/min, where the temperature was first raised to 280°C at a rate of 2°C/min and the mixed powder was held at this temperature for 2 h to lyse and fully carbonize the glucose for full cladding of a carbon material, and then the temperature continued to be raised to a sintering temperature T at a rate of 5°C/min and the powder was held at the sintering temperature for a time t. The graphitization degree of the carbon material was adjusted by adjusting the sintering temperature T and the holding time t. The product was cooled to room temperature to obtain carbon-clad lithium iron phosphate with different degrees of graphitization.

The sintering temperature T and insulation time t corresponding to the carbon-clad lithium iron phosphate with different degrees of graphitization used in the following examples and comparative examples were shown in Table 1.

**Table 1**

| Graphitization degree g₁ | Sintering temperature T (°C) | Insulation time t (h) |
|---|---|---|
| 0 | 500 | 6 |
| 5% | 700 | 8 |
| 15% | 750 | 8 |
| 20% | 800 | 8 |
| 25% | 800 | 10 |
| 30% | 850 | 10 |
| 35% | 900 | 10 |
| 40% | 900 | 12 |
| 50% | 1000 | 12 |
| 55% | 1100 | 12 |

### Example 1

### Preparation of a positive electrode plate

The carbon-clad lithium iron phosphate as a positive electrode active material (having a carbon content of 1.5%, a graphitization degree of 15%, a powder resistivity of 30 Ω·cm, and a powder compaction density of 2.5 g/cm³), carbon black (Super P) as a conductive agent, polyvinylidene fluoride (PVDF) as a binder, and polyvinyl alcohol as a dispersant were fully stirred and mixed in a mass ratio of 97.4: 0.4: 2.0: 0.2 in an appropriate amount of solvent NMP to form a uniform positive electrode slurry; and the positive electrode slurry was uniformly applied to a surface of an aluminum foil as a positive electrode current collector (having a thickness of 15 µm), and a positive electrode plate was obtained after drying and cold pressing. The positive electrode plate had an areal density of 410 mg/1540.25 mm² and a compaction density of 2.6 g/cm³.

The graphitization degree of the positive electrode active material refers to a graphitization degree of a carbon material in a shell of the positive electrode active material. The graphitization degree of the positive electrode active material was calculated according to the formula g = (0.344 - d₀₀₂)/(0.344 - 0.3354) × 100%, where d₀₀₂ may be obtained with an X-ray diffractometer in accordance with JIS K 0131-1996 and JB/T 4220-2011. In the above formula, d₀₀₂ was the interlayer spacing of a C (002) crystal plane in the crystal structure of the positive electrode active material expressed in nanometers (nm). The test instrument may be a Bruker D8 Discover X-ray diffractometer.

The powder resistivity of the positive electrode active material may be tested by the following steps: weighing 1-5 g of a sample to be tested, adjusting the depth of a loading chamber of a powder resistivity meter, adding the sample to the loading chamber, applying pressure, recording the powder resistivity of the positive electrode active material under different pressure, stopping testing until the pressure continues to increase and the powder resistivity value does not change, and recording a powder resistivity value at this time as the powder resistivity of the positive electrode active material. The test instrument may be a PRCD 2100 powder resistivity meter from Yuanneng Technology Company.

The powder compaction density of the positive electrode active material may be determined by an electronic pressure testing machine in accordance with GB/T 24533-2009. 1 g of a sample to be tested was weighed, the sample was added to a mold with a bottom area of 1.327 cm², the pressure was applied to 3 tons, held for 30 seconds, released and held for 10 seconds, and then a powder compaction density of the positive electrode active material under a force of 3 tons was recorded and calculated. The test instrument may be a UTM7305 electronic pressure testing machine.

### Preparation of a negative electrode plate

Graphite as a negative electrode active material, styrene butadiene rubber (SBR) as a binder, carboxymethyl cellulose sodium (CMC) as a thickener, and carbon black (Super P) as a conductive agent were fully stirred and mixed in a mass ratio of 96.7: 1.7: 0.7: 0.9 in an appropriate amount of deionized water as a solvent to form a uniform negative electrode slurry; and the negative electrode slurry was uniformly applied to a surface of a copper foil as a negative electrode current collector (having a thickness of 6 µm), and a negative electrode plate was obtained after drying and cold pressing. The negative electrode plate had an areal density of 180 mg/1540.25 mm² and a compaction density of 1.65 g/cm³.

### Preparation of an electrolytic solution

Ethyl carbonate (EC), ethyl methyl carbonate (EMC), and diethyl carbonate (DEC) were mixed in a volume ratio of 1: 1: 1 to obtain an organic solvent, and then fully dried LiPF₆ was dissolved in the organic solvent to prepare a 1 mol/L electrolytic solution.

### Preparation of a battery

The prepared positive electrode plate and negative electrode plate were die-cut, slit, and wound with a separator to form an electrode assembly, followed by hot pressing, coating, tab welding, adapter fixing, putting into a shell, and welding with a top cover; afterwards, moisture was removed by baking, and the prepared electrolytic solution was injected, followed by formation and capacity procedures; and finally, wrapping with a blue film was performed to complete the preparation of a battery (namely, a battery cell). The separator was located between the positive electrode plate and the negative electrode plate, and included a 5 µm polyethylene base film and a 15 µm Al₂O₃ coating.

### Examples 2-17 and Comparative Examples 2-6

The preparation methods for batteries were similar to those in Example 1 with the exception that the parameters of the positive electrode active material, the mass percentage w₂ of the positive electrode active material, and the mass percentage wi of the conductive agent were different. The specific parameters were detailed in Tables 1 and 2.

### Example 18

The preparation method for a battery was similar to those in Example 4 with the exception that the positive electrode plate had an areal density of 300 mg/1540.25 mm² and a compaction density of 2.6 g/cm³; and the negative electrode plate had an areal density of 135 mg/1540.25 mm² and a compaction density of 1.65 g/cm³.

### Example 19

The preparation method for a battery was similar to those in Example 4 with the exception that the positive electrode plate had an areal density of 500 mg/1540.25 mm² and a compaction density of 2.6 g/cm³; and the negative electrode plate had an areal density of 225 mg/1540.25 mm² and a compaction density of 1.65 g/cm³.

### Comparative Example 1

The preparation method for a battery was similar to those in Example 1 with the exception that amorphous carbon-clad lithium iron phosphate was used as the positive electrode active material, a mass percentage of the positive electrode active material was 95.8%, and a mass percentage of the conductive agent was 2.0%.

### Test section

Performances of the battery cells prepared above were tested below. It should be noted that the batteries mentioned in the following performance tests refer to battery cells.

### (1) Test on volume energy density of the battery

Volume energy density of the battery (Wh/L) = (discharge capacity of the battery × discharge plateau voltage of the battery)/ volume of the battery.

The discharge capacity of the battery was tested by the following method: charging the prepared fresh battery at 1/3 C constant current to 3.65 V at 25°C, and then discharging the battery at 1/3 C constant current to 2.0 V to obtain the discharge capacity of the battery.

The discharge plateau voltage of the battery was a potential at which the electrochemical reaction reached equilibrium, and can be obtained from a battery tester.

The volume of the battery was tested by a drainage method. When testing, the battery was placed in pure water, and the volume of discharged water was the volume of the battery.

### (2) Test on rate performance of the battery

At 25°C, the prepared fresh battery was charged at a constant current rate of 1/3 C, 1 C, 3 C, and 5 C respectively to an upper limit of cutoff voltage of the battery (corresponding to 100% SOC), then charged with constant voltage until the current was 0.05 C, and discharged at a constant current rate of 1/3 C to a lower limit of cutoff voltage of the battery (corresponding to 0% SOC), and the discharge energy of the battery at this time was recorded.

The discharge energy 100% of the battery obtained at a 1/3 C charging rate was used to calculate discharge energy retention rates of the battery at 1 C, 3 C, and 5 C charging rates.

### (3) Test on direct-current internal resistance of the battery

At 25°C, the fresh battery prepared above was charged with constant current of 1 C to the upper limit of cut-off voltage of the battery (corresponding to 100% SOC), then charged with constant voltage to current of 0.05 C, and discharged by the constant current of 1 C to the lower limit of cut-off voltage of the battery (corresponding to 0% SOC), and the discharge capacity at this time was recorded to obtain an initial discharge capacity of the battery. Cyclic charge and discharge tests were performed on the battery according to the above method until the discharge capacity of the battery decayed to 80% of the initial discharge capacity of the battery.

At 25°C, direct-current internal resistance testing was performed on the fresh battery and the battery with cyclic capacity decaying to 80% of the initial discharge capacity, to obtain an initial direct-current internal resistance of the battery and a direct-current internal resistance of the battery cycled to 80% SOH, respectively.

The direct-current internal resistance of the battery was tested by the following method: adjusting the capacity of the battery to 50% SOC, then charging the battery with a pulse rate of 4 C for 30 seconds, and recording voltages of the battery before and after pulse charging. The charging direct-current internal resistance of the battery (mS2) = (voltage at the end of pulse charging - voltage before pulse charging)/ charging current.

### (4) Test on resistance of the positive electrode plate

The resistance of the positive electrode plate may be tested by instruments and methods known in the art. As an example, the resistance may be tested by the following method: obtaining a 4 cm × 25 cm sample in a longitudinal direction of the positive electrode plate, turning on a two-probe resistance tester, and selecting a single-point mode, wherein the test area of an input terminal was 1540.25 mm², 20 parallel samples were selected, pressure was 0.4 t, and a time interval was 15 s; placing the test sample between two probes, clicking a run button on software, then moving a reversing valve downward, automatically collecting a data after 15 s, repeating the test as above on another point, and replacing the test sample until 20 points were tested to continue testing; and obtaining an average value of the above test results as the resistance of the positive electrode plate.

During the test, resistance testing was performed on the freshly prepared positive electrode plate and the positive electrode plate disassembled from the battery with cyclic capacity decaying to 80% of the initial discharge capacity, to obtain an initial resistance of the positive electrode plate and a resistance of the positive electrode plate when the battery was cycled to 80% SOH, respectively.

An exemplary method for obtaining the positive electrode plate from the battery was as follows: fully discharging the battery, then disassembling the battery to take out the positive electrode plate, soaking the positive electrode plate in dimethyl carbonate (DMC) for more than 72 h, cleaning the positive electrode plate, and drying the positive electrode plate in a vacuum oven after the solvent, lithium salt, additives, and the like in the electrolytic solution of the positive electrode plate were completely leached. The resistance of the dried positive electrode plate was tested according to the above method.

**Table 2**

| Serial number | Positive electrode active material | | | | Mass percentage of each component in the positive electrode material composition | | Positive electrode plate | | | 100000 × (w₁/H) | 100000 × (w₁/CW) |
|---|---|---|---|---|---|---|---|---|---|---|---|
| | Graphitizat ion degree gi | Powder resistivity (Ω·cm) | Content of carbon element | Dv50 (µm) | w₁ | w₂ | Areal density (mg/ 1540.25 mm²) | Compact! on density (g/cm³) | Thickne ss H (µm) | | |
| Example 1 | 15% | 30 | 1.5% | 1.5 | 0.4% | 97.4% | 410 | 2.6 | 102 | 3.91 | 0.98 |
| Example 2 | 20% | 20 | 2.0% | 1.5 | 0.2% | 97.6% | 410 | 2.6 | 102 | 1.95 | 0.49 |
| Example 3 | 25% | 10 | 2.5% | 1.5 | 0% | 97.8% | 410 | 2.6 | 102 | 0 | 0 |
| Example 4 | 30% | 5 | 2.8% | 1.5 | 0% | 97.8% | 410 | 2.6 | 102 | 0 | 0 |
| Example 5 | 35% | 3 | 3.0% | 1.5 | 0% | 97.8% | 410 | 2.6 | 102 | 0 | 0 |
| Example 6 | 40% | 2 | 3.2% | 1.5 | 0% | 97.8% | 410 | 2.6 | 102 | 0 | 0 |
| Example 7 | 50% | 1 | 3.5% | 1.5 | 0% | 97.8% | 410 | 2.58 | 103 | 0 | 0 |
| Example 8 | 30% | 5 | 2.8% | 1.5 | 0.2% | 97.6% | 410 | 2.6 | 102 | 1.95 | 0.49 |
| Example 9 | 30% | 5 | 2.8% | 1.5 | 0.4% | 97.4% | 410 | 2.6 | 102 | 3.91 | 0.98 |
| Example 10 | 30% | 5 | 2.8% | 1.5 | 0.6% | 97.2% | 410 | 2.6 | 102 | 5.86 | 1.46 |
| Example 11 | 30% | 5 | 2.8% | 1.5 | 0.8% | 97.0% | 410 | 2.6 | 102 | 7.81 | 1.95 |
| Example 12 | 30% | 5 | 2.8% | 1.5 | 1.0% | 96.8% | 410 | 2.6 | 102 | 9.77 | 2.44 |
| Example 13 | 20% | 20 | 2.0% | 1.5 | 0% | 97.8% | 410 | 2.6 | 102 | 0 | 0 |
| Example 14 | 20% | 20 | 2.0% | 1.5 | 0.4% | 97.4% | 410 | 2.6 | 102 | 3.91 | 0.98 |
| Example 15 | 20% | 20 | 2.0% | 1.5 | 0.6% | 97.2% | 410 | 2.6 | 102 | 5.86 | 1.46 |
| Example 16 | 20% | 20 | 2.0% | 1.5 | 0.8% | 97.0% | 410 | 2.6 | 102 | 7.81 | 1.95 |
| Example 17 | 20% | 20 | 2.0% | 1.5 | 1.0% | 96.8% | 410 | 2.6 | 102 | 9.77 | 2.44 |
| Example 18 | 30% | 5 | 2.8% | 1.5 | 0% | 97.8% | 300 | 2.6 | 75 | 0 | 0 |
| Example 19 | 30% | 5 | 2.8% | 1.5 | 0% | 97.8% | 500 | 2.6 | 125 | 0 | 0 |
| Comparativ e Example 1 | 0 | 60 | 2.8% | 1.5 | 2.0% | 95.8% | 410 | 2.6 | 102 | 19.53 | 4.88 |
| Comparativ e Example 2 | 5% | 50 | 0.7% | 1.5 | 0% | 97.8% | 410 | 2.6 | 102 | 0 | 0 |
| Comparativ e Example 3 | 5% | 50 | 0.7% | 1.5 | 1.5% | 96.3% | 410 | 2.6 | 102 | 14.65 | 3.66 |
| Comparativ e Example 4 | 55% | 3 | 4.0% | 1.5 | 0% | 97.8% | 410 | 2.55 | 104 | 0 | 0 |
| Comparativ e Example 5 | 30% | 5 | 2.8% | 1.5 | 1.5% | 96.3% | 410 | 2.6 | 102 | 14.65 | 3.66 |
| Comparativ e Example 6 | 20% | 20 | 2.0% | 1.5 | 1.5% | 96.3% | 410 | 2.6 | 102 | 14.65 | 3.66 |

**Table 3**

| Serial number | Resistance of positive electrode plate | | Direct-current internal resistance of battery | | Performance of battery | | | |
|---|---|---|---|---|---|---|---|---|
| | Initial resistance | Battery cycled to 80% SOH | Initial direct-curr ent internal resistance | Battery cycled to 80% SOH | Volume energy density (Wh/L) | 1 C energy retention rate | 3 C energy retention rate | 5C energy retention rate |
| Example 1 | 0.25 Ω | 0.51 Ω | 0.55 mΩ | 0.92 mΩ | 396 | 99.60% | 88.70% | 70.20% |
| Example 2 | 0.25 Ω | 0.51 Ω | 0.55 mΩ | 0.91 mΩ | 398 | 99.70% | 88.90% | 70.50% |
| Example 3 | 0.25 Ω | 0.51 Ω | 0.55 mΩ | 0.92 mQ | 400 | 99.70% | 88.90% | 70.40% |
| Example 4 | 0.25 Ω | 0.51 Ω | 0.54 mΩ | 0.92 mQ | 400 | 99.70% | 89.10% | 70.60% |
| Example 5 | 0.23 Ω | 0.49 Ω | 0.52 mΩ | 0.90 mΩ | 400 | 99.70% | 89.10% | 70.60% |
| Example 6 | 0.22 Ω | 0.48 Ω | 0.51 mΩ | 0.89 mΩ | 400 | 99.70% | 89.00% | 70.50% |
| Example 7 | 0.21 Ω | 0.47 Ω | 0.5 mΩ | 0.88 mΩ | 396 | 99.60% | 88.90% | 70.40% |
| Example 8 | 0.24 Ω | 0.50 Ω | 0.53 mΩ | 0.91 mΩ | 398 | 99.70% | 88.90% | 70.50% |
| Example 9 | 0.23 Ω | 0.49 Ω | 0.52 mΩ | 0.90 mΩ | 396 | 99.80% | 88.50% | 69.90% |
| Example 10 | 0.22 Ω | 0.48 Ω | 0.51 mΩ | 0.89 mΩ | 394 | 99.60% | 88.20% | 69.70% |
| Example 11 | 0.21 Ω | 0.47 Ω | 0.50 mΩ | 0.88 mΩ | 392 | 99.70% | 87.50% | 68.50% |
| Example 12 | 0.20 Ω | 0.46 Ω | 0.49 mΩ | 0.87 niQ | 390 | 99.60% | 87.10% | 67.10% |
| Example 13 | 0.27 Ω | 0.54 Ω | 0.57 mΩ | 0.94 mΩ | 400 | 99.60% | 87.60% | 69.10% |
| Example 14 | 0.24 Ω | 0.50 Ω | 0.54 mΩ | 0.90 mΩ | 396 | 99.70% | 88.80% | 70.40% |
| Example 15 | 0.23 Ω | 0.49 Ω | 0.53 mΩ | 0.89 mΩ | 394 | 99.80% | 88.40% | 70.10% |
| Example 16 | 0.22 Ω | 0.48 Ω | 0.52 mΩ | 0.88 mΩ | 392 | 99.70% | 88.00% | 69.60% |
| Example 17 | 0.21 Ω | 0.47 Ω | 0.51 mΩ | 0.87 mQ | 390 | 99.70% | 87.40% | 68.70% |
| Example 18 | 0.24 Ω | 0.50 Ω | 0.52 mΩ | 0.90 mΩ | 360 | 99.70% | 89.70% | 71.30% |
| Example 19 | 0.25 Ω | 0.53 Ω | 0.54 mΩ | 0.93 mΩ | 460 | 99.70% | 88.90% | 70.20% |
| Comparative Example 1 | 0.92 Ω | 1.43 Ω | 0.97 mΩ | 1.56 mΩ | 382 | 95.60% | 74.20% | 52.60% |
| Comparative Example 2 | 0.60 Ω | 1.13 Ω | 0.72 mΩ | 1.68 mΩ | 400 | 95.90% | 78.40% | 58.20% |
| Comparative Example 3 | 0.29 Ω | 0.61 Ω | 0.57 mΩ | 1.09 mΩ | 386 | 99.20% | 87.90% | 69.60% |
| Comparative Example 4 | 0.25 Ω | 0.51 Ω | 0.54 mΩ | 0.92 niQ | 390 | 99.60% | 88.40% | 69.50% |
| Comparative Example 5 | 0.17 Ω | 0.42 Ω | 0.46 mΩ | 0.84 mΩ | 386 | 99.70% | 85.20% | 64.70% |
| Comparative Example 6 | 0.19 Ω | 0.45 Ω | 0.49 mΩ | 0.85 mΩ | 386 | 99.70% | 86.50% | 66.50% |

According to the test results in Table 3, when the graphitization degree of the positive electrode active material was 10%-50% and the mass percentage of the positive electrode conductive agent was 0%-1%, the battery can have both high energy density and good rate performance. In particular, the battery further had good high-rate charging performance.

Comparative Examples 1-6 did not satisfy that the graphitization degree of the positive electrode active material was 10%-50% and/or the mass percentage of the positive electrode conductive agent was 0%-1%, so the battery cannot have both high energy density and good rate performance.

In Comparative Example 1, amorphous carbon-clad lithium phosphate was used as the positive electrode active material; when the areal density of the positive electrode plate was high, although up to 2% of the positive electrode conductive agent was used, the positive electrode cannot form a good conductive network due to the poor conductivity of the lithium phosphate, so the battery cannot have good rate performance; and due to the high consumption of the positive electrode conductive agent, the volume energy density of the battery decreased.

In Comparative Example 2, carbon-clad lithium phosphate having a graphitization degree of less than 10% was used as the positive electrode active material, so the battery can have high energy density, but the rate performance of the battery was poor. In order to obtain good rate performance of the battery, up to 1.5% of positive electrode conductive agent was added in Comparative Example 3 on the basis of Comparative Example 2, then the volume energy density of the battery significantly decreased, and the improvement on the discharge energy retention rate of the battery at 3 C and 5 C charging rates was also limited.

In Comparative Example 4, carbon-clad lithium phosphate having a graphitization degree of greater than 50% was used as the positive electrode active material, which cannot ensure that the battery had high energy density and good rate performance. A possible reason was that, after the graphitization degree exceeded 50%, the compaction density of the positive electrode plate decreased, which in turn led to a decrease in the energy density of the battery; moreover, the reaction rate of the positive electrode may be significantly higher than that of the negative electrode, excessive lithium ions accumulated on the negative electrode side during charging to increase the viscosity of the electrolytic solution on the negative electrode side, which was not conducive to the transport of lithium ions; and the higher the charging current of the battery, the more significant the decrease in rate performance. Based on the test results of Examples 1-7 and Comparative Example 4, it can be seen that the discharge energy retention rate at the 1C charging rate of Comparative Example 4 was close to that of Examples 1-7, but the discharge energy retention rates at the 3C and 5C charging rates of Comparative Example 4 were significantly lower than those of Examples 1-7.

Based on the test results of Examples 3-12 and Comparative Example 5, when the graphitization degree of the carbon-clad lithium phosphate was 25% to 50%, although the areal density of the positive electrode plate was relatively high, the positive electrode conductive agent can still be canceled, which can not only further increase the energy density of the battery, but also enable the battery to have good rate performance, especially have good high-rate charging performance. In addition, based on the test results of Examples 4 and 8-12 and Comparative Example 5, the increase in the consumption of the positive electrode conductive agent will not significantly improve the rate performance of the battery, and after the consumption of the positive electrode conductive agent exceeded 1%, the discharge energy retention rates of the battery at 3 C and 5 C charging rates will significantly decrease.

Based on the test results of Examples 1-2, Examples 13-17, and Comparative Example 6, when the graphitization degree of the positive electrode active material was low, the positive electrode conductive agent can also be canceled, which can ensure that the battery had both high energy density and good rate performance, but when the positive electrode plate had a lower content of positive electrode conductive agent, such as when the content of the positive electrode conductive agent was greater than 0 and less than or equal to 1% and optionally greater than 0 and less than or equal to 0.4%, the rate performance, especially the high-rate charging performance, of the battery can be further improved. However, when the consumption of the positive electrode conductive agent exceeded 1%, the discharge energy retention rates of the battery at 3 C and 5 C charging rates will significantly decrease.

Based on the test results of Examples 1, 9, and 14, when the same quantity of positive electrode conductive agent was used, an increase in the graphitization degree of the carbon-clad lithium phosphate within a range can help improve the rate performance of the battery, but when the graphitization degree of the carbon-clad lithium phosphate further increased, the rate performance of the battery, especially the discharge energy retention rates of the battery at 3 C and 5 C charging rates may decrease. Therefore, by adjusting the graphitization degree of the positive electrode active material and the consumption of the positive electrode conductive agent reasonably, the battery can have both high energy density and good rate performance, especially good high-rate charging performance.

Based on the test results of Examples 4, 18, and 19, when the positive electrode plate included the positive electrode material composition of the present application, even if the areal density of the positive electrode plate increased, the battery can still have both high energy density and good rate performance. Unlike the research in the prior art, the consumption of the positive electrode conductive agent did not need to be increased, and the positive electrode conductive agent can even be canceled.

It should be noted that the present application is not limited to the foregoing embodiments. The foregoing embodiments are only examples, and all embodiments within the scope of the technical solution of the present application that have substantially the same composition and effects as the technical concept fall within the technical scope of the present application. Moreover, various variations that can be conceived by those skilled in the art and other embodiments constituted by combining some elements of the embodiments without departing from the scope of the main purpose of the present application are further included in the scope of the present application.

## Claims

1. A positive electrode material composition, comprising a positive electrode active material and optionally, a positive electrode conductive agent, wherein the positive electrode active material comprises a core and a shell on at least a portion of a surface of the core, the core comprises lithium phosphate, the shell comprises a carbon material, a graphitization degree of the positive electrode active material is denoted as g₁, a mass percentage of the positive electrode conductive agent in the positive electrode material composition is denoted as wi, 10% ≤ gi ≤ 50%, and 0% ≤ wi ≤ 1%.

2. The positive electrode material composition according to claim 1, wherein 15% ≤ gi ≤ 48% and 0% ≤ wi ≤ 0.8%; optionally, 15% ≤ gi ≤ 48% and 0% ≤ wi ≤ 0.6%; and more optionally, 15% ≤ g₁ ≤ 48% and 0% ≤ w₁ ≤ 0.4%.

3. The positive electrode material composition according to claim 1 or 2, wherein 20% ≤ gi ≤ 45% and 0% ≤ wi ≤ 0.6%; optionally, 20% ≤ gi ≤ 45% and 0% ≤ wi ≤ 0.4%; and more optionally, 20% ≤ gi ≤ 45% and 0% ≤ wi ≤ 0.2%.

4. The positive electrode material composition according to any one of claims 1-3, wherein 25% ≤ g₁ ≤ 50% and 0% ≤ wi ≤ 0.2%.

5. The positive electrode material composition according to any one of claims 1-4, wherein 25% ≤ g₁ ≤ 50% and wi is 0%; optionally, 25% ≤ gi ≤ 40% and wi is 0%; and more optionally, 25% ≤ gi ≤ 35% and wi is 0%.

6. The positive electrode material composition according to any one of claims 1-5, wherein the graphitization degree gi of the positive electrode active material is obtained by an X-ray diffraction method.

7. The positive electrode material composition according to any one of claims 1-6, wherein
a powder resistivity of the positive electrode active material is greater than 0 and less than or equal to 30 Ω·cm, and optionally 0.5 Q·cm-10 Ω·cm; and/or
a mass percentage of a carbon element in the positive electrode active material is 0.5%-5%, and optionally 1%-3.5%.

8. The positive electrode material composition according to any one of claims 1-7, wherein
an average particle size Dv50 of the positive electrode active material is 0.5 µm-10 µm, and optionally 1 µm-4 µm; and/or
a powder compaction density of the positive electrode active material is ≥ 2.5 g/cm³ under a force of 3 tons; and/or
the lithium phosphate comprises one or more selected from lithium iron phosphate, lithium manganese iron phosphate, and a composite material obtained by cladding and/or doping modification of the above materials; optionally, the lithium phosphate has a molecular formula of LiFe_{1-x-y}MnₓM_{y}PO₄, wherein 0 ≤ x ≤ 1, and 0 ≤ y<1; and M comprises one or more selected from transition metal elements other than Fe and Mn, and non-transition metal elements, and optionally comprises one or more selected from V, Nb, Ti, Co, Ni, Sc, Ge, Mg, Al, Zr, Mn, Hf, Ta, Mo, W, Ru, Ag, Sn, and Pb; and/or
the positive electrode conductive agent comprises one or more selected from superconducting carbon, conductive graphite, acetylene black, carbon black, Ketjen black, carbon dots, carbon nanotubes, graphene, and carbon nanofibers.

9. The positive electrode material composition according to any one of claims 1-8, wherein a mass percentage w₂ of the positive electrode active material in the positive electrode material composition is ≥ 97.0%, and optionally 97.0%-98.2%.

10. The positive electrode material composition according to any one of claims 1-9, wherein the positive electrode material composition further comprises a positive electrode binder and/or a positive electrode dispersant,
optionally, a mass percentage w₃ of the positive electrode binder in the positive electrode material composition is 1%-3%; and
optionally, a mass percentage w₄ of the positive electrode dispersant in the positive electrode material composition is 0%-0.5%.

11. A positive electrode plate, comprising a positive electrode current collector and a positive electrode film layer disposed on the positive electrode current collector, wherein the positive electrode film layer comprises the positive electrode material composition according to any one of claims 1-10.

12. The positive electrode plate according to claim 11, wherein an areal density of the positive electrode plate is ≥ 300 mg/1540.25 mm², and optionally ≥ 410 mg/1540.25 mm², ≥ 450 mg/1540.25 mm², or ≥ 500 mg/1540.25 mm².

13. The positive electrode plate according to claim 11 or 12, wherein the areal density of the positive electrode plate is denoted as CW, in mg/1540.25 mm², the positive electrode plate satisfies 0 ≤ 100000 × (w₁/CW) ≤ 3.4, and optionally, 0 ≤ 100000 × (w₁/CW) ≤ 1.8.

14. The positive electrode plate according to any one of claims 11-13, wherein a thickness H of the positive electrode film layer is 70 µm-145 µm, and optionally 90 µm-138 µm.

15. The positive electrode plate according to any one of claims 11-14, wherein the thickness of the positive electrode film layer is denoted as H, in µm, the positive electrode satisfies 0 ≤ 100000 × (wi/H) ≤ 14, and optionally, 0 ≤ 100000 × (wi/H) ≤ 11.

16. The positive electrode plate according to any one of claims 11-15, wherein a compaction density PD of the positive electrode plate is ≥ 2.55 g/cm³, optionally ≥ 2.58 g/cm³, and more optionally ≥ 2.60 g/cm³.

17. The positive electrode plate according to any one of claims 11-16, wherein the positive electrode plate further comprises a conductive coating located between the positive electrode current collector and the positive electrode film layer,
optionally, the conductive coating comprises conductive carbon black and a binder; and
optionally, a thickness of the conductive coating is greater than 0 and less than or equal to 2 µm.

18. The positive electrode plate according to any one of claims 11-17, wherein
a resistance of the positive electrode plate is 0.1 S2-1 Q, and optionally 0.1 Q-0.6 Q; and/or
a thickness of the positive electrode current collector is 10 µm-18 µm.

19. A method for preparing a positive electrode plate, comprising the following steps: providing a positive electrode slurry, coating at least one surface of a positive electrode current collector with the positive electrode slurry, and obtaining a positive electrode plate through drying and compaction procedures, wherein the positive electrode slurry comprises the positive electrode material composition according to any one of claims 1-10 and a solvent.

20. A battery, comprising the positive electrode material composition according to any one of claims 1-10, the positive electrode plate according to any one of claims 11-18, or the positive electrode plate prepared by the method according to claim 19.

21. An electrical device, comprising the battery according to claim 20.
